# EUROPÄISCHE PATENTSCHRIFT

(11) **EP 1 776 202 B1**
(45) Veröffentlichungstag und Bekanntmachung des Hinweises auf die Patenterteilung: **20.04.2016**
(21) Anmeldenummer: 05759054.9
(22) Anmeldetag: 11.07.2005
(51) Int. Cl.: B23K 9/133

(54) **FÖRDEREINRICHTUNG EINES SCHWEISSDRAHTS**
TRANSPORTING DEVICE OF A WELDING WIRE
DISPOSITIF DE TRANSPORT D'UN FIL À SOUDER

(30) Priorität: 09.07.2004 AT 11662004
(43) Veröffentlichungstag der Anmeldung: 25.04.2007
(73) Patentinhaber: Fronius International GmbH, 4643 Pettenbach (AT)
(72) Erfinder: SPIESBERGER, Alfred, A-4611 Buchkirchen (AT)
(74) Vertreter: Sonn & Partner Patentanwälte
(86) Internationale Anmeldenummer: PCT/AT2005/000263
(87) Internationale Veröffentlichungsnummer: WO 2006/005096

(56) Entgegenhaltungen:
- EP-A- 1 016 486
- US-A- 3 550 830
- US-A- 4 177 912
- US-B1- 6 568 578

## Beschreibung

Die Erfindung betrifft eine Fördereinrichtung eines Schweißdrahts mit zumindest einem aus einer Antriebsrolle und einer Druckrolle bestehenden Rollenpaar, wobei die Antriebsrolle mit einem Antriebsmotor kuppelbar ist und mit einer Vorrichtung zum Spannen des Schweißdrahtes, wobei die Druckrolle in einem schwenkbaren Druckhebel gelagert ist und die Spannvorrichtung einen Spannbügel aufweist, der zum Fixieren und zur Druckbeaufschlagung mit dem Druckhebel verbindbar ist, wobei die Spannvorrichtung eine Vorrichtung zur Einstellung des Anpressdrucks der Druckrolle auf den Schweißdraht aufweist, welche durch einen Zuganker, ein Federelement und eine Stellscheibe gebildet ist, und der Spannbügel und der Druckhebel eine Fixiervorrichtung aufweisen.

Eine Einfädelvorrichtung für eine Drahtfördereinrichtung der gegenständlichen Art ist beispielsweise in der EP 1 016 486 A gezeigt, wobei zumindest ein aus einer Antriebsrolle und einer Druckrolle bestehendes Rollenpaar vorgesehen ist, wobei die Antriebsrolle mit einem Antriebsmotor kuppelbar ist, weiters eine Vorrichtung zum Spannen des Schweißdrahts vorgesehen ist, wobei die Druckrolle in einem schwenkbaren Druckhebel gelagert ist und die Spannvorrichtung einen Spannbügel aufweist, der zum Fixieren und zur Druckbeaufschlagung mit dem Druckhebel verbindbar ist. Die Konstruktion ist relativ groß und benötigt daher relativ viel Platz.

Aus der US 6,568,578 B1 ist eine Einrichtung für die Förderung eines Schweißdrahtes der gegenständlichen Art gemäß dem Oberbegriff vom Anspruch 1 bekannt geworden, bei der der Spannbügel und der Druckhebel eine Fixiervorrichtung aufweisen.

Aus dem Stand der Technik sind Einrichtungen zur Förderung eines Schweißdrahts bekannt, bei welchen zumindest ein Rollenpaar, insbesondere zumindest eine Antriebsrolle und zumindest eine Druckrolle, zur Drahtförderung eingesetzt werden. Dabei wird die Rolle, insbesondere die Antriebsrolle beispielsweise auf eine Welle aufgesteckt und durch ein weiteres Befestigungselement auf der Welle fixiert. Die Druckrolle wird beispielsweise über elastische Elemente oder extra angeordnete Spannhebel gegen die Antriebsrolle bzw. bei eingeschobenem Schweißdraht gegen diesen gedrückt. Weiters ist das Rollenpaar in seiner axialen Position fixiert bzw. weist ein geringes Spiel auf. Für eine erleichterte Drahtförderung sind in den Rollen beispielsweise Nuten bzw. Einbuchtungen angeordnet. Um die Drahtfördergeschwindigkeit zu ermitteln, kann ein weiteres Rollenpaar eingesetzt werden. Natürlich kann die Drahtfördergeschwindigkeit auch über die Druckrolle ermittelt werden. Dabei verläuft der Schweißdraht zwischen einer Rolle, welche die Umlaufgeschwindigkeit ermittelt und einer weiteren Rolle und/oder einer Fläche. Aus der Umlaufgeschwindigkeit der zumindest einen Rolle kann die Schweißdrahtgeschwindigkeit ermittelt werden.

Nachteilig bei den aus dem Stand der Technik bekannten Drahtfördervorrichtungen ist, dass die Abmessungen relativ groß sind, wodurch Schweißbrenner mit darin eingebauten Drahtfördervorrichtungen sehr groß werden, wodurch die Handhabung des Schweißbrenners und weiters die Zugänglichkeit erheblich gestört wird. Weiters ist eine Montage sowie ein Wechsel der Rollen der Drahtfördervorrichtung langwierig und kompliziert. Das Rollenpaar ist zueinander in axialer Position fixiert bzw. weist ein geringes Spiel auf, wodurch durch Fertigungstoleranzen eine Schrägstellung und/oder Verschiebung der beiden Rollen zueinander entstehen kann, wodurch die Drahtförderung wesentlich erschwert wird und der Schweißdraht verformt werden kann. Beim Einfädeln des Schweißdrahts in die Drahtfördervorrichtung muss zumindest eine Rolle weggeklappt, weggeschwenkt oder weggeschoben werden. Dadurch ist der Draht während des Einfädelvorganges weitgehend ungeführt, weshalb dieser beim Einfädeln aus der Führung geraten kann. Durch ein allenfalls weiteres Rollenpaar für eine Erfassung der Drahtfördergeschwindigkeit werden die Abmessungen weiter vergrößert.

Die Aufgabe der vorliegenden Erfindung besteht daher in der Schaffung einer möglichst kleinen, kompakten und leicht handhabbaren Fördervorrichtung, welche zuverlässig arbeitet und sich weiters durch kostengünstige Fertigung und Wartung auszeichnet. Eine weitere Aufgabe der Erfindung besteht in der Schaffung einer einfachen und zuverlässigen Befestigung der Rollen, insbesondere der Antriebsrolle der Drahtfördervorrichtung an einer Welle. Weiters sollen für den Antrieb der Rollen übliche Motoren mit einer einfach ausgeführten Welle verwendet werden können und unterschiedliche Rollentypen ohne spezielle Bearbeitung der Welle einfach und schnell befestigt sowie ausgetauscht werden können. Eine weitere Aufgabe der Erfindung besteht in der Schaffung eines möglichst kleinen, kompakten und in jeden gängigen Schweißbrenner einsetzbaren Spannsystems für die Drahtförder- vorrichtung. Des weiteren liegt der Erfindung eine Aufgabe zugrunde, dass der Schweißdraht einfach in die Drahtfördervorrichtung eingefädelt werden kann.Weiters soll eine automatische Ausrichtung der Rollen der Drahtfördervorrichtung zueinander bzw. zur Mittelachse des Schweißdrahtes stattfinden.

Die erfindungsgemäße Aufgabe wird durch eine im Anspruch 1 beanspruchte oben genannte Fördereinrichtung eines Schweißdrahtes gelöst, wobei die Fixiervorrichtung durch zumindest eine Bohrung am Spannbügel oder am Druckhebel und einen korrespondierenden, in die Bohrung einrastbaren Fixierstift am Druckhebel bzw. Spannbügel gebildet ist. Dadurch wird eine Drahtfördervorrichtung geschaffen, deren Abmessungen minimiert werden können, wodurch nur ein geringer Platzbedarf notwendig ist und diese somit einfach im Schweißbrenner eingebaut werden kann. Durch diese Konstruktion ist die Druckbeaufschlagung einstellbar und kann somit der Druck auf den jeweilig eingesetzten Schweißdraht angepasst werden.

Durch die Merkmale der Ansprüche 2 bis 4 kann eine definierte und optimierte Druckbeaufschlagung auf den Schweißdraht geschaffen werden, welche nach Öffnen uns Schließen des Spannsystems reproduzierbar vorliegt.

Durch das Merkmal des Anspruches 5 wird ein Verlauf des Schweißdrahts durch das Spannsystem erzielt, wodurch der für die Drahtfördervorrichtung benötigte Platzbedarf weiter reduziert werden kann.

Vorteilhaft ist auch eine Ausgestaltung nach Anspruch 6, da dadurch ein reproduzierbarer Druck auf den Schweißdraht eingestellt werden.

Durch die Merkmale des Anspruchs 7 kann die Druckbeaufschlagung in einfacher Art und Weise in lediglich einem Arbeitsgang durchgeführt werden kann.

Durch die Merkmale der Ansprüche 8 bis 11 wird eine einfache Lagerung bzw. ein einfacher Tausch der Rollen ermöglicht und gleichzeitig ein sicherer Betrieb der Drahtfördervorrichtung gewährleistet.

Wenn die Vorspannung des Federelements durch die Drehbewegung des Spannbügels veränderbar ist, kann damit der Druck bzw. die Anpresskraft der Druckrolle auf den Schweißdraht in einfacher Art und Weise verändert bzw. verstellt werden.

Durch die Anordnung mehrerer vorzugsweise auf einer Wippe angeordneter Druckrollen am Druckhebel, kann eine bessere Drahtförderung ermöglicht werden.

Vorteilhafterweise ist ein Zwischenstück zum Befestigen der Antriebsrolle oder Druckrolle an einer Welle vorgesehen, wobei die Antriebsrolle eine nutförmige Einbuchtung und eine Lagerbohrung für die Anordnung der Welle im Zentrum der Antriebsrolle oder Druckrolle aufweist, mit einem auf die Welle aufsteckbaren Grundkörper, welcher Grundkörper hülsenförmig ausgebildet ist, wobei in Längsrichtung des Grundkörpers bevorzugt über die gesamte Länge des Grundkörpers ein Schlitz angeordnet ist. Dadurch wird in vorteilhafter Weise erreicht, dass eine einfache und von dem Durchmesser der Welle unabhängige Befestigung des Zwischenstückes an der Welle geschaffen ist.

Von Vorteil ist eine Ausgestaltung nach Anspruch 14, da dadurch ein aus dem Stand der Technik bekanntes Mittel zur Befestigung des Zwischenstückes an der Welle eingesetzt wird und das Zwischenstück kraftschlüssig, also verdrehfest mit der Welle verbunden wird.

Durch eine Ausgestaltung nach Anspruch 15 wird in vorteilhafter Weise erreicht, dass die Rolle in einfacher Art und Weise auf dem Zwischenstück befestigt werden kann. Wenn der Grundkörper direkt oder unter Zwischenschaltung eines Getriebes an der Welle eines Antriebsmotors befestigt ist, können ideale Antriebseigenschaften der Rolle erreicht werden.

Vorteilhaft ist auch eine Ausgestaltung nach Anspruch 16, da dadurch eine automatische Positionierung der Rolle bzw. des Zwischenstückes erreicht und somit eine exakte Drahtförderung gewährleistet ist.

Von Vorteil ist auch, wenn die Außenfläche des Grundkörpers zur Befestigung mittels eines Werkzeugs und bzw. oder zur händischen Betätigung ausgebildet ist, da eine einfache Montage des Zwischenstücks an der Welle geschaffen ist.

Wenn der Grundkörper hutförmig ausgebildet ist, kann dadurch das Zwischenstück in axialer Richtung exakt positioniert werden. Weiters ist bei dieser Ausführung von Vorteil, dass das Ende der Welle durch das Zwischenstück abgedeckt und somit geschützt wird.

Gemäß einem weiteren Merkmal der Erfindung ist ein Ansatzelement und ein Mittel zum Befestigen der Rolle an einer Welle vorgesehen.

Von Vorteil ist auch, wenn das Ansatzelement eine zentrisch zur Lagerbohrung und zumindest teilweise durch das Ansatzelement verlaufende Ausnehmung aufweist und das Ansatzelement als Halteelement und/oder Befestigungselement ausgebildet ist. Dadurch weist die Rolle einen längeren Führungsbereich auf der Welle auf und kann das Mittel zum Befestigen auch im Ansatzelement angeordnet werden.

Wenn das Ansatzelement vorzugsweise in der Lagerbohrung ein Innengewinde aufweist, ist die Rolle bzw. das Ansatzelement direkt an der Welle befestigbar, und es sind somit keine zusätzlichen Teile bzw. Elemente von Nöten. Des weiteren ist die Fertigung der Rolle bzw. des Ansatzelementes in einfacher Art und Weise durchführbar.

Am Ansatzelement kann zumindest eine bevorzugt konisch ausgebildete Zentrierfläche vorgesehen sein. Dadurch ist eine einfache Zentrierung der Rolle und/oder des Ansatzelementes gewährleistet und dadurch läuft die Drahtförderung exakt ab.

Wenn die Außenseite des Ansatzelements zur Befestigung mittels eines Werkzeugs und bzw. oder zur händischen Betätigung ausgebildet ist, und die Außenseite der Rolle und/oder des Ansatzelements eine bevorzugt als Planfläche ausgebildete Anschlagfläche aufweist, wird in vorteilhafter Weise erreicht, dass die Rolle bzw. die nutförmige Einbuchtung bei der Montage bzw. beim Tausch der Rolle geschützt ist, da der Arbeitsbereich bzw. der Bereich, in dem das Werkzeug zum Rollentausch angesetzt wird, genau definiert ist. Des weiteren kann durch die Verwendung eines Werkzeuges das Drehmoment der Befestigung der Rolle genau festgelegt werden, wodurch eine reproduzierbare Rollenmontage bzw. ein reproduzierbarer Rollentausch ermöglicht ist.

Vorteilhaft ist auch eine Ausgestaltung nach den Ansprüchen 17 und 18, da dadurch die Welle in einfacher Art und Weise ausgeführt werden kann, weiters am Zwischenstück entsprechende Flächen und/oder Gewinde angeordnet sind und somit eine einfache und kostengünstige Fertigung erreicht ist. Des weiteren ist von Vorteil, dass bei vorhandener Welle die Flexibilität hinsichtlich Einsatz unterschiedlicher Rollentypen erhöht wird, da in diesem Falle das Zwischenstück ausgetauscht werden kann, die Welle jedoch nicht verändert werden muss.

Wenn die Welle direkt oder unter Zwischenschaltung eines Getriebes mit einem Antriebsmotor verbunden ist, ist dadurch die Kraftübertragung vom Motor auf die Rolle bzw. die Drehgeschwindigkeit der Rolle beeinflussbar.

Vorteilhafterweise weist die Antriebsrolle und die Druckrolle eine Nut zur Aufnahme des Schweißdrahts auf und ist im Zentrum der Antriebsrolle und der Druckrolle eine Lagerbohrung angeordnet, über die die Antriebsrolle und die Druckwelle jeweils auf einer Welle bzw. Achse anordenbar ist, wobei an zumindest einer Rolle zumindest ein Zentrierelement angeordnet ist, wodurch eine gegenseitige axiale Ausrichtung der Rollen zueinander bzw. der Rollen zum Schweißdraht erfolgt. Dadurch wird in vorteilhafter Weise erreicht, dass die Rollen exakt zueinander bzw. zur Drahtachse ausgerichtet werden, wodurch eine exakte Drahtförderung ermöglicht wird. Weiters wird ein Quetschen des Schweißdrahtes weitgehend verhindert.

Von Vorteil ist auch eine Ausgestaltung nach den Ansprüchen 20 und 21, da dadurch die Zentrierung der Rollen zueinander bzw. zur Schweißdrahtachse mit geringem Kraftaufwand erfolgt.

Wenn mindestens eine der beiden Rollen, insbesondere die Druckrolle, in Richtung der Drehachse verschiebbar gelagert ist und eine Rolle, insbesondere die mit dem V-förmigen Vorsprung ausgebildete Rolle starr mit der Welle verbunden ist, muss somit nur ein Element verschoben werden, um eine Zentrierung der Rollen zueinander zu erreichen.

Das Zentrierelement kann seitlich versetzt zur Nut angeordnet sein, oder es sind zwei Zentrierelemente angeordnet, wobei die Nut zur Aufnahme des Schweißdrahts zwischen den Zentrierelementen angeordnet ist. Dadurch findet eine verbesserte Zentrierung statt. Weiters kann die nutförmige Einbuchtung, insbesondere die Nut in den Rollen derart angeordnet werden, dass eine optimale Drahtförderung erreicht wird.

Die vorliegende Erfindung wird anhand der beigefügten Zeichnungen, welche Ausführungsbeispiele der Erfindung zeigen, näher erläutert.

### Darin zeigen

Fig. 1 eine schematische Darstellung einer Schweißmaschine bzw. eines Schweißgerätes;
Fig. 2 bis 4 verschiedene Ansichten einer Ausführungsform einer erfindungsgemäßen Einrichtung zur Förderung eines Schweißdrahtes;
Fig. 5 eine perspektivische Ansicht einer Antriebsrolle mit einem daran angeschlossenen Zwischenstück;
Fig. 6 ein Schnittbild durch die Antriebsrolle und das Zwischenstück gemäß Fig. 5;
Fig. 7 eine perspektivische Ansicht einer Ausführungsform eines erfindungsgemäßen Spannsystems;
Fig. 8 ein Schnittbild durch das Spannsystem gemäß Fig. 7;
Fig. 9 ein Schnittbild durch einen Teil einer Drahtfördervorrichtung im Bereich der Druckrolle;
Fig. 10 und 11 vereinfachte und schematische Darstellungen einer Ausführungsform einer Einfädelvorrichtung für eine Drahtfördervorrichtung;
Fig. 12 bis 15 verschiedene Ausführungsformen einer Selbstzentriervorrichtung für ein aus einer Antriebsrolle und einer Druckrolle bestehendes Rollenpaar zur Förderung eines Schweißdrahts; und
Fig. 16 und 17 verschiedene Ansichten einer Ausführungsform einer Einrichtung zur Erfassung der Fördergeschwindigkeit des Schweißdrahts.

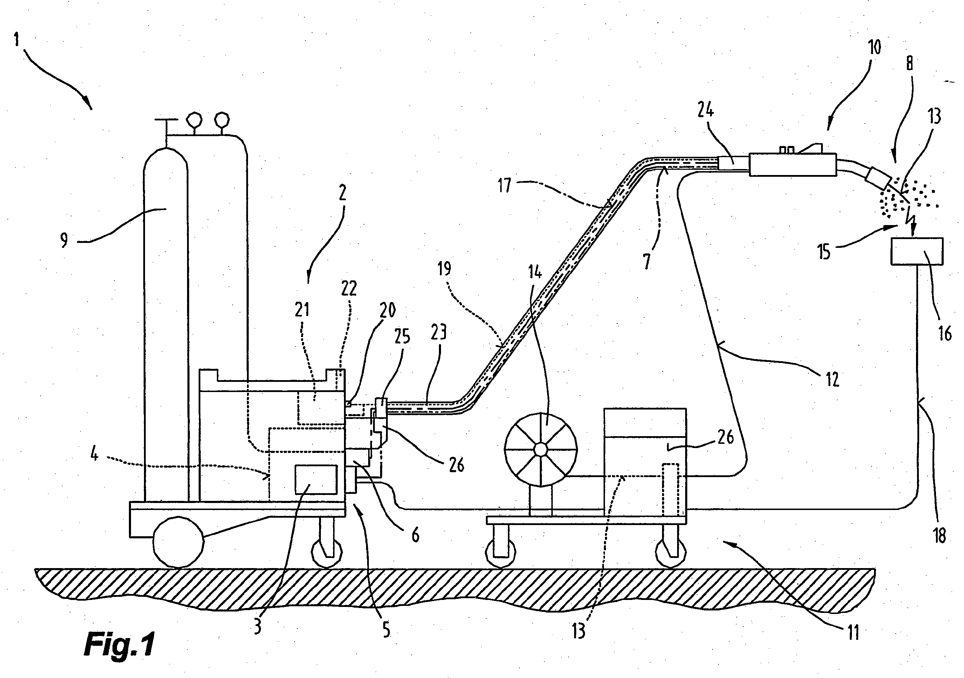

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw.' ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist. Das Drahtvorschubgerät kann auch für die Fassförderung ausgebildet sein. Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode bzw. dem Schweißdraht 13 und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. einen gebildeten Plasmastrahl für einen Prozess ein Stromkreis aufgebaut werden kann.

Zum Kühlen des Schweißbrenners 10 kann über einen Kühlkreislauf 19 der Schweißbrenner 10 beispielsweise unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben werden.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Hierzu ist es beispielsweise möglich, dass der Schweißbrenner 10 als lüftgekühlter Schweißbrenner 10 ausgeführt werden kann.

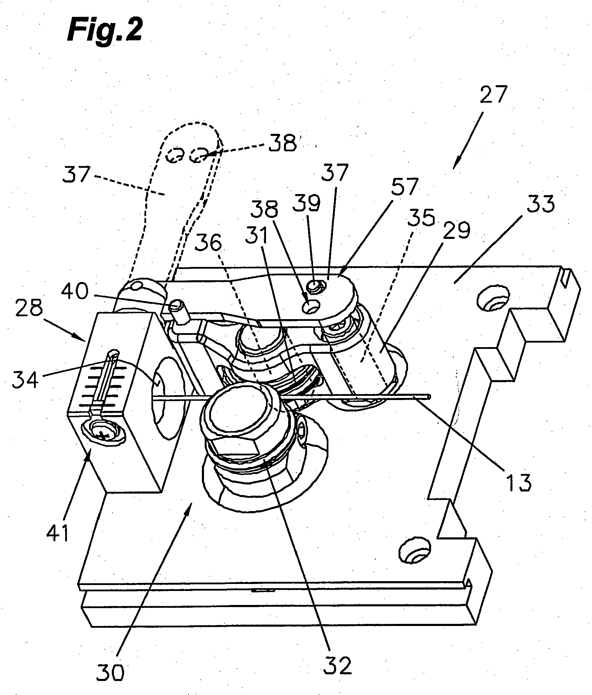

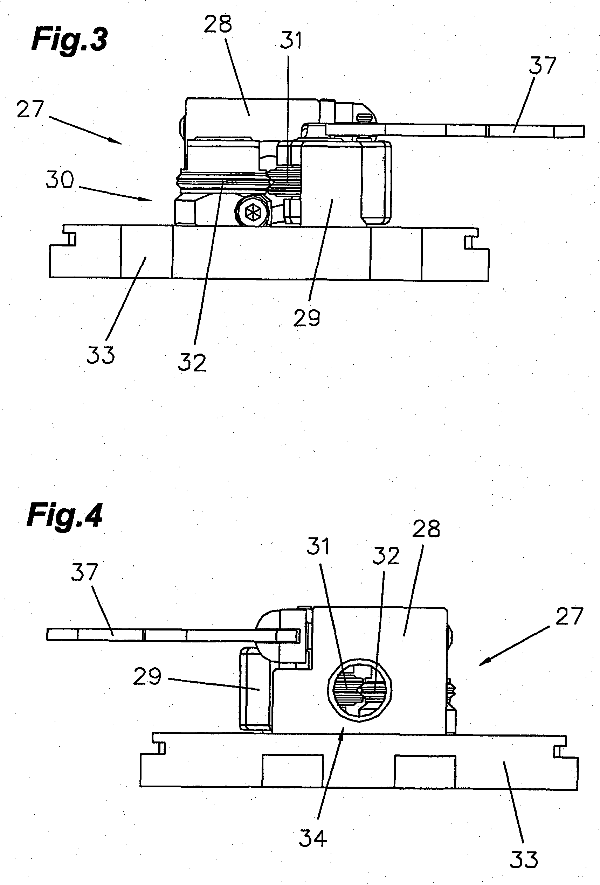

In den Fig. 2 bis 4 ist eine Drahtfördervorrichtung 27, welche den Schweißdraht 13 dem Schweißbrenner 10 zuführt, schematisch und vereinfacht in zusammengebautem Zustand dargestellt. Die Drahtfördervorrichtung 27 beinhaltet eine Spannvorrichtung 28, einen Druckhebel 29 und einen Gleitschuh 30, wobei im Druckhebel 29 eine Druckrolle 31 beweglich angeordnet ist und im bzw. am Gleitschuh 30 eine Antriebsrolle 32 angeordnet ist. Die Spannvorrichtung 28, der Druckhebel 29 und der Gleitschuh 30 sind dabei beispielsweise auf einer Montageplatte 33 angeordnet bzw. mit dieser fest verbunden.

Die Drahtfördervorrichtung 27 funktioniert derart, dass der Schweißdraht 13 durch einen bevorzugt runden Durchbruch 34 in der Spannvorrichtung 28 zwischen die Antriebsrolle 32 und Druckrolle 31 geführt wird. Die Antriebsrolle 32 ist dabei im bzw. am Gleitschuh 30 angeordnet und wird bevorzugt von einem nicht dargestellten Motor angetrieben. Um den Schweißdraht 13 mittels der Antriebsrolle 32 fördern zu können, ist an der dem Schweißdraht 13 gegenüberliegenden Seite der Antriebsrolle 32 die Druckrolle 31 im Druckhebel 29 drehbar angeordnet. Der Druckhebel 29 ist über eine Schwenkachse, insbesondere einen in der Montageplatte 33 angeordneten Führungsbolzen 35, schwenkbar gelagert. Die im Druckhebel 29 angeordnete Druckrolle 31 ist entlang eines Bolzens 36 beweglich bzw. dreh- und verschiebbar gelagert. Der Bolzen 36 bzw. die Aufnahme des Bolzens 36 ist dabei derart ausgebildet, dass der Bolzen 36 für einen Rollentausch einfach entfernt werden kann. Der Führungsbolzen 35 ist dabei im Endbereich bzw. Randbereich des Druckhebels 29 angeordnet, um einen größtmöglichen Radius, und somit einen größtmöglichen Schwenkbereich zu erreichen. Dadurch wird eine sichere Förderung des Schweißdrahtes 13 gewährleistet.

Um einen Druck bzw. eine Anpresskraft auf den Schweißdraht 13 zu erzeugen, damit der Schweißdraht 13 gefördert wird, wird der Druckhebel 29 über den Führungsbolzen 35 in Richtung des Schweißdrahtes 13 geschwenkt, bis die im Druckhebel 29 angeordnete Druckrolle 31 den Schweißdraht 13 berührt. Um den Druck bzw. die Anpresskraft auf den Schweißdraht 13 aufzubauen und danach aufrecht zu erhalten, wird ein an der Spannvorrichtung 28 schwenkbar gelagerter Spannbügel 37 in Richtung des Druckhebels 29 geschwenkt, der nunmehr den Druckhebel 29 fixiert. Der Spannbügel 37 und der Druckhebel 29 weisen dazu zumindest eine Fixiervorrichtung 57 auf. Die Fixiervorrichtung 57 kann durch eine am Spannbügel 37 angeordnete Bohrung 38 gebildet sein, in welche ein am Druckhebel 29 angeordneter Fixierstift 39 einrasten kann. Somit ist der Spannbügel 37 zum Fixieren und zur Druckbeaufschlagung mit dem Druckhebel 29 verbindbar. Des weiteren kann am Druckhebel 29 ein Anschlagelement 40 angeordnet sein, an welchem der Spannbügel 37 bei der Druckbeaufschlagung zum Anliegen kommt. Der Druckhebel 29 mit der darin angeordneten Druckrolle 31 wird bei eingeführtem Schweißdraht 13 in Richtung des Schweißdrahtes 13 geschwenkt und mittels des Spannbügels 37 ein Druck auf den Schweißdraht 13 beaufschlagt. Somit wird der Schweißdraht 13 aufgrund der Reibung, welche zwischen dem Schweißdraht 13 und den sich drehenden Rollen, insbesondere der Antriebsrolle 32 und der Druckrolle 31, entsteht, gefördert.

Um den Druck bzw. die Anpresskraft auf den Schweißdraht 13 einstellen zu können, ist vorteilhafterweise eine Druckeinstellvorrichtung 41 angeordnet. Somit kann bei unterschiedlichen Schweißdrähten 13 eine Einstellung auf den jeweiligen Schweißdraht 13, insbesondere auf den Durchmesser und das Material des Schweißdrahtes 13 vorgenommen werden. Die Druckeinstellvorrichtung 41 ist dabei bevorzugt oberhalb und/oder unterhalb des Schweißdrahts 13, insbesondere quer zum Schweißdraht 13, angeordnet.

Auf die genaue Funktionsweise der einzelnen Elemente der Drahtfördervorrichtung 27 wird in den nachfolgenden Figuren näher eingegangen.

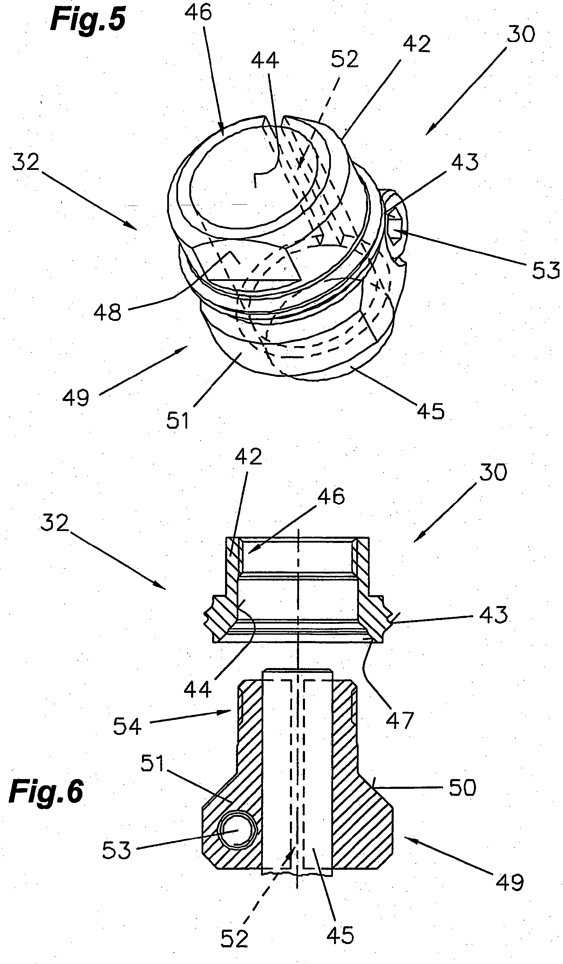

Die Fig. 5 und 6 zeigen eine Antriebsrolle 32 mit einem Ansatzelement 42 und einem Zwischenstück 49.

Die Antriebsrolle 32 weist dabei eine nutförmige Einbuchtung 43 auf, welche um den Umfang der Antriebsrolle 32 verläuft und zur Führung und zur Förderung des Schweißdrahtes 13 bzw. zur Kraftübertragung auf den Schweißdraht 13 dient. Im Zentrum der Antriebsrolle 32 bzw. des Ansatzelementes 42 ist weiters eine durch das Ansatzelement 42 verlaufende Lagerbohrung 44 angeordnet, welche als Ausnehmung ausgebildet ist und über welche die Antriebsrolle 32 bzw. das Ansatzelement 42 auf einer Welle 45 anordenbar ist. Des weiteren weist das Ansatzelement 42 ein Innengewinde 46 auf, welches beispielsweise im Inneren des Ansatzelementes 42, also in der Lagerbohrung 44, angeordnet ist. An der dem Innengewinde 46 gegenüberliegenden Seite des Ansatzelementes 42 und/oder der Antriebsrolle 32 ist zumindest eine Zentrierfläche 47 angeordnet, welche bevorzugt konisch ausgebildet ist. Des weiteren kann an der Außenseite des Ansatzelementes 42 zumindest eine Anschlagfläche 48, welche bevorzugt als Planfläche ausgebildet ist, angeordnet sein.

Das Ansatzelement 42 kann mittels des Innengewindes 46 auf ein korrespondierens Gewinde aufgeschraubt werden. Um eine Zentrierung des Ansatzelementes 42 gegenüber der Welle 45 und/oder eines zwischen der Welle 45 und des Ansatzelementes 42 angeordneten Elementes, beispielsweise einem Zwischenstück 49 zu erreichen, ist die Zentrierfläche 47 am Ansatzelement 42 angeordnet. An der Welle 45 und/oder am Zwischenstück 49 ist ebenfalls zumindest eine Zentrierfläche 50 angeordnet, wodurch bei Aufschrauben des Ansatzelementes 42 auf die Welle 45 und/oder auf das Zwischenstück 49 die Zentrierflächen 47, 50 einander kontaktieren und aufgrund der konischen Anordnung der Zentrierflächen 47, 50 eine automatische Zentrierung sowie Verspannung des Ansatzelementes 42 auf der Welle 45 und/oder dem Zwischenstück 49 gewährleistet wird. Das Ansatzelement 42 kann mittels eines Werkzeuges oder aber auch per Hand mittels der Anschlagfläche 48 aufgeschraubt werden. Dabei ist es notwendig, dass das Drehmoment zum Befestigen der Antriebsrolle 32 größer ist als die Kraft, welche bei der Drahtförderung ein Lösen der Antriebsrolle 32 vom Zwischenstück 49 bewirken würde. Durch die Anordnung der Anschlagfläche 48 an der gegenüberliegenden Seite der Antriebsrolle 32 ist eine problemlose Zugänglichkeit zur Anschlagfläche 48 mittels eines Werkzeuges gegeben. Somit wird die Antriebsrolle 32, insbesondere die Einbuchtung 43, bei der Montage bzw. bei einem Tausch der Antriebsrolle 32 nicht beschädigt. Des weiteren ist durch die derartige Anordnung eine einfache und schnelle Montage bzw. Wechsel der Antriebsrolle 32 ermöglicht.

Das erfindungsgemäße Zwischenstück 49 kann hülsenförmig ausgebildet sein und über die Welle 45 geschoben werden.

Das Zwischenstück 49 weist dabei einen in Längsrichtung eines Grundkörpers 51 des Zwischenstücks 49 verlaufenden Schlitz 52 auf, der sich bevorzugt über die gesamte Länge des Grundkörpers 51 erstreckt. Das Zwischenstück 49 wird auf die Welle 45 aufgesteckt bzw. aufgeschoben. Weiters ist am Grundkörper 51 des Zwischenstücks 49 ein Element 53 zum Befestigen des Zwischenstücks 49 an der Welle 45 angeordnet. Durch Betätigen des Befestifungselements 53 wird der Schlitz 52 zusammengedrückt, wodurch zwischen dem Zwischenstück 49 und der Welle 45 eine Reibverbindung entsteht und das Zwischenstück 49 drehfest mit der Welle 45 verbunden wird. Das Element 53 ist in dem dargestellten Ausführungsbeispiel als Schraubverbindung ausgebildet. Das Zwischenstück 49 wird also durch Verdrehen des Elements 53 zusammengezogen und mit der Welle 45 verbunden. Natürlich ist es auch möglich das Element 53 anders auszuführen, beispielsweise durch ein normal zur Welle 45 angeordnetes, durchgehendes Gewinde im Zwischenstück 49, in welches eine Schraube, z.B. eine Wurmschraube, bis zum Kontakt mit der Welle 45 eingeschraubt wird. Weiters ist auch ein Exzenter möglich, welcher bei Verdrehung aufgrund der exzentrischen Anordnung den Schlitz 52 zusammendrückt und so die drehfeste Verbindung des Zwischenstücks 49 mit der Welle 45 erreicht wird. Natürlich können sämtliche aus dem Stand der Technik bekannten Systeme zur drehfesten Befestigung des Zwischenstücks 42 auf der Welle 45 eingesetzt werden. Somit ist auf einfache Art und Weise eine Befestigung der Antriebsrolle 32 an der Welle 45 erreichbar. Die Position der Antriebsrolle 32 an der Welle 45 kann leicht verändert werden, da lediglich das Element 53 des Zwischenstückes 49 gelöst werden muss und das Zwischenstück 49 nach Erreichen der gewünschten Position wieder an der Welle 45 befestigt wird. Dabei wird das Befestigungsmoment vorteilhafterweise so gewählt, dass eine Presspassung zwischen der Welle 45 und dem Zwischenstück 49 erreicht wird.

Um eine einfache Montage des Zwischenstücks 49 zu ermöglichen, kann am Grundkörper 51, insbesondere an der Innenfläche des Grundkörpers 51, zumindest eine Zentrier- und/oder Planfläche angeordnet sein (nicht dargestellt). Somit kann das Zwischenstück 49 drehfest über die Welle 45, welche dann ebenfalls eine Zentrier- und/oder Planfläche aufweisen muss, geschoben werden und bei Erreichen der gewünschten Position nur noch mittels des Elements 53 befestigt werden. Hierbei ist es weiters möglich, die Zentrier- und/oder Planfläche der Welle 45 so auszubilden, dass die Zentrier- und/oder Planfläche nur so weit an der Welle 45 entlang verläuft, dass das Zwischenstück 49 nur noch aufgeschoben werden muss und beim Ende der Zentrier- und/oder Planfläche ansteht und somit die gewünschte Position, insbesondere die erforderliche Arbeitshöhe der Antriebsrolle 32, automatisch erreicht ist.

Am Zwischenstück 49 bzw. am Grundkörper 51 des Zwischenstücks 49 kann weiters ein Gewinde, insbesondere ein Außengewinde 54, an der gegenüberliegenden Seite des Elements 53 angeordnet sein. Auf dieses Außengewinde 54 wird das Ansatzelement 42 der Antriebsrolle 32, mittels des korrespondierenden Innengewindes 46, aufgeschraubt. Somit ist durch das Innengewinde 46 des Ansatzelementes 42 und durch das Außengewinde 54 des Zwischenstücks 49 ein Mittel zum Befestigen der Antriebsrolle 32 an der Welle 45 gebildet. Zwischen dem Außengewinde 54 und dem Element 53 ist die Zentrierfläche 50 angeordnet. Das Ansatzelement 42 wird soweit auf das Zwischenstück 49 aufgeschraubt, bis sich die Zentrierfläche 47 des Ansatzelementes 42 und die Zentrierfläche 50 des Zwischenstücks 49 berühren. Durch Anziehen des Ansatzelementes 42 auf dem Zwischenstück 49 mit einem gewissen Drehmoment wird eine drehfeste Verbindung zwischen dem Ansatzelement 42 und dem Zwischenstück 49 erreicht. Der Grundkörper 51 des Zwischenstücks 49 ist an der Außenseite als Formteil für die Befestigung mittels Werkzeugen und/oder der Hand ausgebildet. Dies kann durch zumindest eine als Planfläche ausgebildete Anschlagfläche 48, in welche ein Werkzeug eingreifen kann, realisiert werden. Somit wird eine einfache und sichere Montage des Zwischenstückes 49, sowie ein einfacher Wechsel der Antriebsrolle 32 erreicht.

Die Welle 45 ist vorteilhafterweise direkt mit einem Antrieb, insbesondere einem Elektromotor verbunden, wobei der Antrieb durch einen bekannten Antrieb gebildet sein kann (nicht dargestellt). Natürlich ist es auch möglich, zwischen der Welle 45 und dem Antrieb bzw. dem Motor ein Getriebe anzuordnen, wodurch beispielsweise eine Unter- oder Übersetzung erreicht werden kann und somit ein kleinerer Motor für beispielsweise die selbe Fördergeschwindigkeit eingesetzt werden könnte.

Der Grundkörper 51 des Zwischenstücks 49 kann direkt mit der Welle 45 verbunden sein. Natürlich ist es auch möglich, dass der Grundkörper 51 unter Zwischenschaltung eines Getriebes an der Welle 45 eines Antriebes, insbesondere eines Antriebsmotors, angeordnet wird.

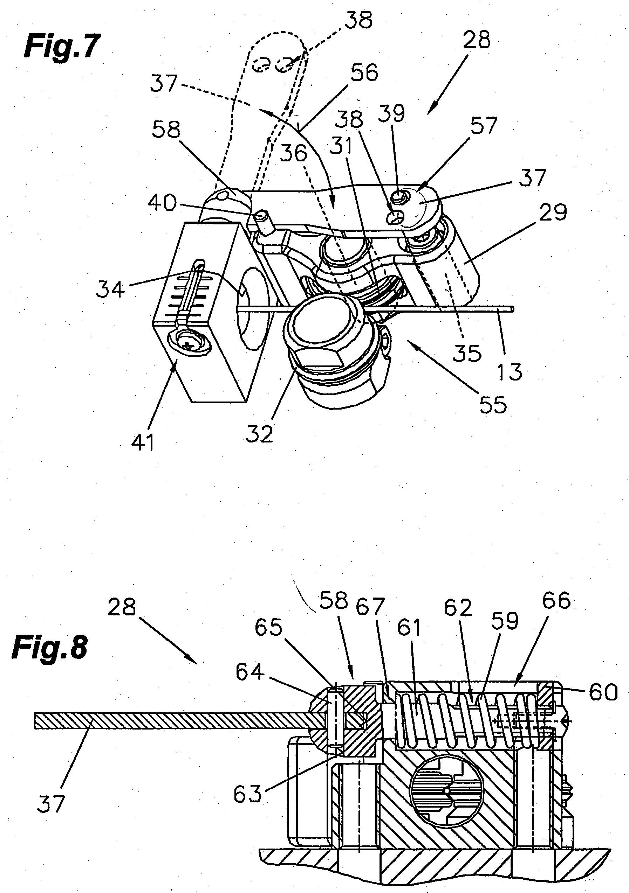

In den Fig. 7 und 8 ist eine Ausbildungsform des erfindungsgemäßen Spannsystems 28 vereinfacht und schematisch dargestellt. Das Spannsystem 28 besteht aus zumindest einem aus der Antriebsrolle 32 und der Druckrolle 31 bestehenden Rollenpaar 55. Die Antriebsrolle 32 wird, wie in den Fig. 5 und 6 beschrieben, mit einem Antriebsmotor verbunden. Die Druckrolle 31 ist in einem schwenkbaren Druckhebel 29 gelagert und wird mittels der Spannvorrichtung 28 auf den Schweißdraht 13 gedrückt. Die Spannvorrichtung 28 weist den Spannbügel 37 zum Fixieren und zur Druckbeaufschlagung auf, welcher mit dem Druckhebel 29 verbindbar ist. Der Spannbügel 37 ist an der Spannvorrichtung 28 beweglich, insbesondere schwenkbar bzw. drehbar, gelagert. Beispielsweise kann der Spannbügel 37 über einen Winkel 56 zwischen beispielsweise 70° und 110° verschwenkt werden.

Der Spannbügel 37 und der Druckhebel 29 weisen eine Fixiervorrichtung 57 auf, um den Druck, welcher vom Spannbügel 37 und dem Druckhebel 29 mittels der Druckrolle 31 auf den Schweißdraht 13 ausgeübt wird, aufrecht zu erhalten. Die Fixiervorrichtung 57 ist dabei durch zumindest eine am Spannbügel 37 angeordnete Bohrung 38, insbesondere jedoch zwei Bohrungen 38, und einen korrespondierenden Fixierstift 39 am Druckhebel 29 gebildet. Natürlich kann der Fixierstift 39 auch am Spannbügel 37 angeordnet werden, welcher dann in zumindest eine Bohrung 38 am Druckhebel 29 eingreift. Weiters ist ein Anschlagelement 40 am Druckhebel 29 angeordnet, an dem der Spannbügel 37 bei der Fixierung zum Anliegen kommt.

Die Spannvorrichtung 28 weist weiters eine Druckeinstellvorrichtung 41 auf, welche vorteilhafterweise oberhalb und/oder unterhalb des Schweißdrahts 13, insbesondere quer zum Schweißdraht 13 angeordnet ist. Die Druckeinstellvorrichtung 41 kann aus einem Zuganker 58, einem Federelement 59 und einer Stellscheibe 60 bestehen. Der Zuganker 58 ist aus einem länglichen Grundkörper 61 gebildet, wobei an einer Seite des Grundkörpers 61 der Spannbügel 37 schwenkbar gelagert ist und an der gegenüberliegenden Seite des Grundkörpers 61 ein Gewinde 62 angeordnet ist. Um den Spannbügel 37 am Zuganker 58 zu lagern, ist im Zuganker 58 eine Lagerbohrung 63 angeordnet, in welche ein Lagerstift 64 eingeschoben wird. Normal zur Lagerbohrung 63 ist eine Ausnehmung 65 angeordnet, in welche nunmehr der Spannbügel 37 eingeschoben wird. Nach dem Einschieben des Spannbügels 37 in die Ausnehmung 65 wird der Lagerstift 64 in die Lagerbohrung 63 des Zugankers 58 und durch eine Bohrung im Spannbügel 37 geschoben und somit die Lagerung des Spannbügels 37 ermöglicht. Die Lagerbohrung 63 und der Lagerstift 64 sind dabei so gebildet, dass der Lagerstift 64 in die Lagerbohrung 63 eingepresst wird. Somit ist es durch Ausschlagen des Lagerstifts 64 mittels eines Werkzeugs, beispielsweise eines Durchschlags, möglich, den Lagerstift 64 zu lösen bzw. zu wechseln. Aufgrund der Presspassung des Lagerstifts 64 in der Lagerbohrung 63 ist dieser gegen ein Herausfallen gesichert.

Der Zuganker 58 ist in einer Ausnehmung 66 in der Spannvorrichtung 28 angeordnet, welche über eine kurze Distanz entlang der Öffnung 67 nur unwesentlich größer ausgelegt ist als der Zuganker 58 und nach dieser Distanz wesentlich größer ist als der Zuganker 58. Somit wird eine kurze Führungsfläche in der Ausnehmung 66 für den Zuganker 58 geschaffen. Die Stellscheibe 60 wird auf das Gewinde 62 des Zugankers 58 bzw. des Grundkörpers 61 des Zugankers 58 aufgeschraubt. Zwischen der Stellscheibe 60 und der geringfügig größeren Öffnung 67 der Ausnehmung 66 wird das Federelement 59 angeordnet. Somit wird der Zuganker 58 mittels der an der Spannvorrichtung 28 und der Stellscheibe 60 abstützenden Druckfeder 59 in der Spannvorrichtung 28 federnd gelagert. Um eine Verstellung des Federdruckes der Druckfeder 59 zu erreichen, muss lediglich die Stellscheibe 60 auf dem Zuganker 58 vor oder zurück gedreht werden. Durch das Verdrehen der Stellscheibe 60 in Richtung der Öffnung 67 wird die Druckfeder 59 zusammengedrückt, wodurch eine größere Kraft auf den Zuganker 58 wirkt. Natürlich ist es auch möglich, die Stellscheibe 60 zwar beweglich, also verstellbar, am Zuganker 58 zu positionieren, jedoch ist die Stellscheibe 60 in Längsrichtung des Gewindes 62 des Zugankers 58 in der Spannvorrichtung 28 angeordnet. Somit kann beispielsweise durch eine Drehbewegung des Spannbügels 37 die Vorspannung des Federelements 59 verändert werden. Dadurch ist der Druck bzw. die Anpresskraft für die Druckrolle 31 einstellbar.

Um die Stellscheibe 60 gegen etwaiges Herabfallen durch ein zu weites Zurückdrehen der Stellscheibe 60 vom Zuganker 58 zu sichern, kann an der gegenüberliegenden Seite des Lagerbolzens 64 beispielsweise ein Schraubelement 68 angeordnet sein, welches beispielsweise als Imbusschraube ausgebildet sein kann. Somit kann der Benutzer die Stellscheibe 60 nur bis zum Schraubelement 68 zurückdrehen, und diese nicht vom Zuganker 58 herunterfallen, wodurch auf einfache Art und Weise eine Sicherung der Stellscheibe 60 erreicht wird.

Die Stellscheibe 60 kann als Indikator zum Ablesen des Anpressdruckes der Druckrolle 31 auf den Schweißdraht 13 ausgebildet sein. Somit kann der voreingestellte Druck bzw. die Anpresskraft der Druckrolle 31 auf den Schweißdraht 13 auf einer Skala, entsprechend der Stellung des Indikators abgelesen werden.

Der Spannbügel 37 drückt auf den Druckhebel 29, wodurch die Druckrolle 31 eine Druckkraft auf den Schweißdraht 13 ausübt. Der Druckhebel 29 weist eine Schwenkachse auf, welche durch den Führungsbolzen 35 gebildet ist, über welchen der Druckhebel 29 drehbar an einem Gehäuse oder der Montageplatte 33 gelagert ist. Die Schwenkachse bzw. der Führungsbolzen 35 ist im Endbereich bzw. im Randbereich des Druckhebels 29, insbesondere im Bereich des Fixierstifts 39, angeordnet. Somit wird weniger Druckkraft durch den Spannbügel 37 benötigt und dieses kann wesentlich kleiner ausgeführt werden. Dadurch kann das Spannsystem 28 und somit auch die Drahtfördervorrichtung 27 leichter einem Schweißgerät 1 und/oder dem Schweißbrenner 10 und/oder dem Schlauchpaket 23 angeordnet werden.

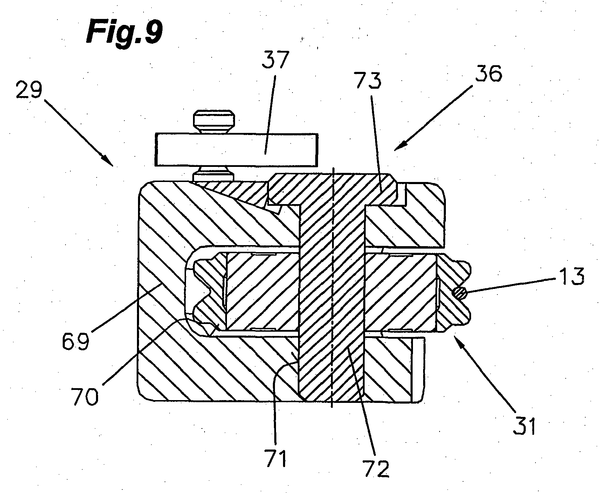

In Fig. 9 ist die Anordnung der Druckrolle 31 im bzw. am Druckhebel 29 vereinfacht und schematisch dargestellt. Um einen einfachen und unkomplizierten Tausch der Druckrolle 31 zu ermöglichen, ist der Bolzen 36 zum Rollentausch aus dem Druckhebel 29 entfernbar. Der Druckhebel 31 besteht aus einem Grundkörper 69, in welchem eine Ausnehmung 70 angeordnet ist. Normal auf die Ausnehmung 70 ist eine Aufnahme 71 angeordnet, in welche der Bolzen 36 eingeschoben wird, wobei bei eingesetzter Druckrolle 31 der Bolzen 36 die Druckrolle 31 im Druckhebel 29 bzw. im Grundkörper 69 des Druckhebels 29 lagert. Somit ist die Druckrolle 31 im mittleren Bereich des Druckhebels 29 angeordnet. Die Druckrolle 31 ist auf dem Bolzen 36 in axialer Richtung des Bolzens 36 beweglich und drehbar angeordnet. Der Bolzen 36 ist dabei aus einem länglichen Führungskörper 72 und einem Bolzenkopf 73 gebildet, wobei der Bolzenkopf 73 einen größeren Durchmesser aufweist als der Führungskörper 72, so dass der Bolzen 36 nach Einschieben von oben durch den Bolzenkopf 73 in der Aufnahme 71 gehalten wird. Somit braucht beim Wechsel der Druckrolle 31 lediglich der Bolzen 36 aus der Aufnahme 71 gezogen werden.

Da der Bolzen 36 nur aufgrund der Schwerkraft in der Aufnahme 71 des Druckhebels 29 festsitzt bzw. hält, wird bei fixiertem Spannbügel 37 am Druckhebel 29 bevorzugt zumindest ein Teil des Bolzens 36 vom Spannbügel 37 überdeckt und so eine ungewollte Längsbewegung des Bolzens 36 verhindert.

Natürlich können auch mehrere Druckrollen 31 im bzw. am Druckhebel 29 angeordnet werden, wobei die Druckrollen 31 beispielsweise auf einer Wippe angeordnet werden können, um eine konstante Druckkraft auf den Schweißdraht 13 zu erzielen.

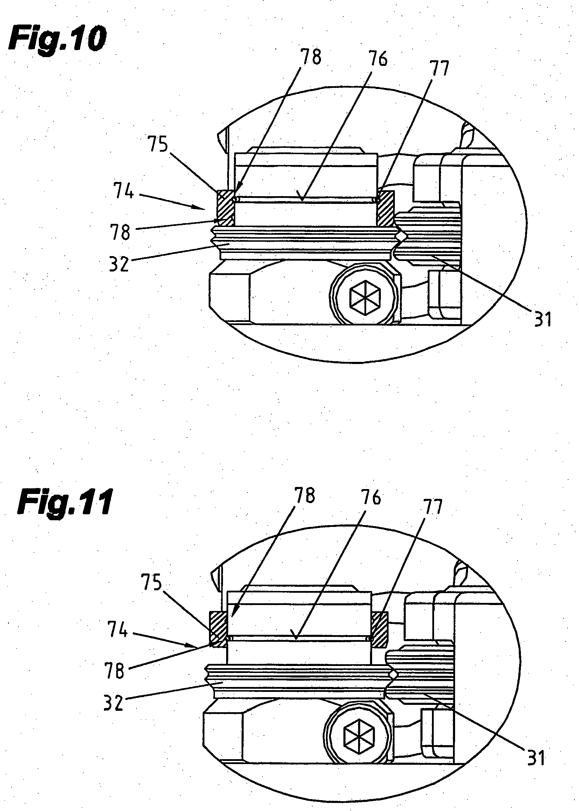

In den Fig. 10 und 11 ist eine Einfädelvorrichtung 74 vereinfacht und schematisch dargestellt. Dabei handelt es sich um eine Detailansicht der erfindungsgemäßen Drahtfördervorrichtung 27. Um den Einfädelvorgang in die Drahtfördervorrichtung 27 zu erleichtern, ist ein verstellbares Distanzelement 75 angeordnet, durch das ein definierter Abstand und/oder eine definierte reduzierte Anpresskraft der Rollen, insbesondere der Antriebsrolle 32 und der Druckrolle 31, zueinander erreicht wird. Mit Hilfe des Distanzelements 75 kann die Anpresskraft während des Einfädelvorganges auf einen definierten Wert reduziert werden.

Das Distanzelement 75 ist zwischen den Rollen 31 und 32 und/oder deren Ansatzelement 42 angeordnet. Über die Kontur des Distanzelementes 75 wird der definierte, für den jeweilig eingesetzten Schweißdraht 13 notwendige Abstand zwischen den Rollen 31, 32 eingestellt. Das Distanzelement 75 ist derart ausgebildet, dass die Antriebsrolle 32 und die Druckrolle 31 einen für den eingesetzten Schweißdraht 13 notwendigen Abstand zueinander aufweisen. Somit wird in einfacher Art und Weise ein wesentlich erleichtertes Einfädeln des Schweißdrahtes 13 erzielt.

Am Ansatzelement 42 der Antriebsrolle 32 ist eine um den Umfang des Ansatzelements 42 verlaufende Nut 76 angeordnet. In diese Nut 76 ist beispielsweise ein O-Ring 77 angeordnet. Im Distanzelement 75 sind zwei in einem definierten Abstand zueinander distanzierte Einbuchtungen 78 angeordnet. Das Distanzelement 75 ist über eine Lagerachse der Rollen 31, 32 in Längsrichtung verschiebbar angeordnet. Wenn nunmehr eine der zwei Einbuchtungen 78 des Distanzelements 75 den O-Ring 77 erreicht, rastet das Distanzelement 75 automatisch ein. Bei der in Fig. 11 dargestellten Position des Distanzelementes 75 ist eine Arbeitsposition eingestellt, bei der die beiden Rollen 31, 32 einander berühren. Bei eingeführtem Schweißdraht 13 würde dieser nunmehr mit einem vordefinierten Anpressdruck gefördert werden und wäre ein Einfädelvorgang nur sehr schwer durchzuführen. Bei der Position gemäß Fig. 10 wird die Druckrolle 31 durch das Distanzelement 75 von der Antriebsrolle 32 weggedrückt, wodurch der Schweißdraht 13 leicht und einfach in die Drahtfördervorrichtung 27 eingefädelt werden kann.

Das Distanzelement 75 wird entlang des Ansatzelements 41 nach unten geschoben, bis die obere Einbuchtung 78 des Distanzelementes 75 in den O-Ring 77 eingreift. Das Distanzelement 75 drückt nun die Druckrolle 31, welche im Druckhebel 29 angeordnet ist, von der Antriebsrolle 32 weg. Somit ist ein einfaches Einfädeln des Schweißdrahtes 13 möglich. Das Distanzelement 75 bzw. der Durchmesser 79 des Distanzelementes 75, wird so gewählt, dass der Schweißdraht 13 leicht in die Drahtfördervorrichtung 27 bzw. in die Einfädelvorrichtung 74 eingefädelt werden kann.

Natürlich ist es auch möglich das Distanzelement 75 exzenterförmig auszubilden, wobei durch Verdrehen des Distanzelementes 75 ein Abstand der Rollen 31, 32 zueinander und/oder eine reduzierte Anpresskraft der Druckrolle 31 zur Antriebsrolle 32 geschaffen wird. Weiters wäre es auch möglich, das Distanzelement 75 elastisch verformbar, vergleichbar mit einem Luftballon, auszubilden wobei über die Veränderung des Volumens des Distanzelementes 75 eine Regulierung des Anpressdruckes erreicht wird. Natürlich kann das Distanzelement 75 auch kegelförmig ausgebildet sein, wodurch bei Verschieben des Distanzelementes 75 die Rollen wiederum auseinandergedrückt werden und somit ein erleichtertes Einfädeln des Schweißdrahtes 13 gewährleistet ist.

Das Distanzelement 75 kann auch mit einem Mittel zur automatischen Verstellung, beispielsweise der Steuervorrichtung 4 des Schweißgerätes 1 verbunden sein und automatisch von der Steuervorrichtung 4 auf den verwendeten Schweißdraht 13 eingestellt werden. Hierzu muss lediglich der verwendete bzw. der zu verwendende Schweißdraht 13 definiert und in die Steuervorrichtung 4 eingegeben werden.

Das Distanzelement 75 ist vorteilhafterweise mit der Antriebsrolle 32 bzw. mit dem Ansatzelement 42 der Antriebsrolle 32 verbunden.

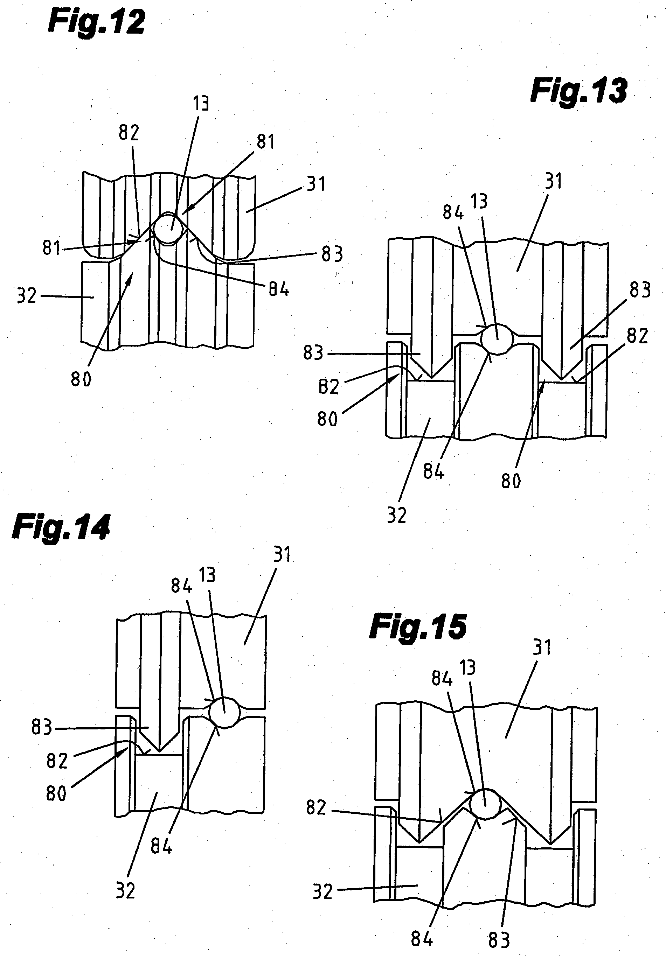

Fig. 12 zeigt eine Ausführungsvariante einer Selbstzentriervorrichtung 80 für ein, insbesondere aus einer Antriebsrolle 32 und einer Druckrolle 31 bestehendes, Rollenpaar zur Förderung eines Schweißdrahts 13 in vereinfachter und schematischer Darstellung. Die Rollen 31, 32 weisen zumindest ein Zentrierelement 81 auf, wodurch eine gegenseitige axiale Ausrichtung der Rollen 31, 32 zueinander bzw. der Rollen 31, 32 zum Schweißdraht 13 beim Schließvorgang des Druckhebels 29 erfolgt.

Das Zentrierelement 81 ist auf einer Rolle, insbesondere auf der Druckrolle 31, als eine bevorzugt trichterförmige Einbuchtung 82 ausgebildet. Die Druckrolle 31 ist entlang der Achse der Druckrolle 31, also des Bolzens 36, verschiebbar gelagert. In der weiteren Rolle, insbesondere in der Antriebsrolle 32, ist das Zentrierelement 81 als ein V-förmiger Vorsprung 83 ausgebildet, welcher weiters eine Nut 84 aufweist. Die Rolle mit dem Vorsprung 83, also die Antriebsrolle 32, ist starr mit der Welle 45 verbunden. Da die an der Druckrolle 31 angeordnete V-förmige Einbuchtung 82 korrespondierend zum V-förmigen Vorsprung 83 ausgebildet ist, wird in einfacher Art und Weise die Zentrierung der Rollen 31, 32 zueinander geschaffen. Somit zentriert sich die Druckrolle 31 zur Antriebsrolle 32 bzw. zum Schweißdraht 13. Die Druckrolle 31 weist, insbesondere in der trichterförmigen Einbuchtung 82, ebenfalls eine Nut 84 auf, in der der Schweißdraht 13 verläuft. Eine der beiden Rollen, insbesondere die Rolle mit dem Vorsprung 83, also die Antriebsrolle 32, ist über die Welle 45 und/oder ein Getriebe mit dem Antriebsmotor verbunden.

Die nachfolgenden Fig. 13 bis 15 zeigen weitere Ausführungsvarianten der Selbstzentriervorrichtung 80 in vereinfachter und schematischer Darstellung.

Dabei ist es möglich, an der Druckrolle 31 den V-förmigen Vorsprung 83 anzuordnen und die zum V-förmigen Vorsprung 83 korrespondierende Einbuchtung 82 an der Antriebsrolle 32 anzuordnen. Weiters kann auch die Antriebsrolle 32 entlang der Achse der Antriebsrolle 32, also entlang der Welle 45, verschiebbar gelagert sein, und die Druckrolle 31 fest mit dem Bolzen 36 verbunden sein.

Weiters kann das Zentrierelement 81 seitlich versetzt zur Nut 84 angeordnet werden, also die Nut 84 nicht zwingend in bzw. an dem Zentrierelement 81 angeordnet sein. Somit können auch mehrere Zentrierelemente 81, beispielsweise zwei Zentrierelemente 81, angeordnet sein, und die Nut 84 für den Schweißdraht 13 zwischen den Zentrierelementen 81 angeordnet sein. Natürlich ist es auch noch möglich, dass die Nut 84 für den Schweißdraht 13 im Zentrierelement 81 einer der beiden Rollen 31, 32 integriert ist und das weitere Zentrierelement 81 der anderen Rolle 32, 31 nutfrei ausgebildet ist.

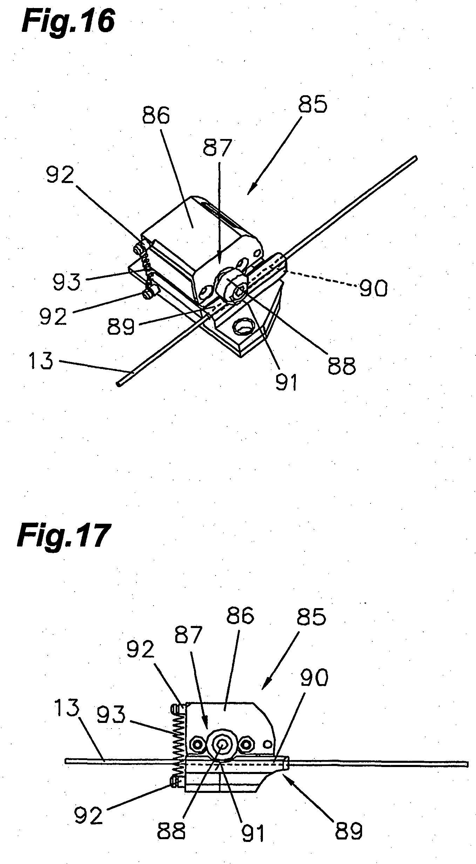

In den Fig. 16 und 17 ist nunmehr eine Einrichtung 85 zur Erfassung der Fördergeschwindigkeit des Schweißdrahts 13 vereinfacht und schematisch dargestellt.

Die Einrichtung 85 ist aus einem Gehäuse 86 bzw. einer Haltevorrichtung, in welchem ein Drehgeber 87 mit einer daran befestigbaren Rolle 88 angeordnet ist, gebildet. Die Einrichtung 85, also das Gehäuse 86 mit dem Drehgeber 87, ist beispielsweise in einem Schweißgerät 1 und/oder einem Drahtvorschubgerät 11 und/oder einem Schweißbrenner 10 angeordnet. Der Drehgeber 87 der Einrichtung 85 zur Erfassung der Fördergeschwindigkeit des Schweißdrahts 13 steht dabei mittels der Rolle 88 mit dem Schweißdraht 13 in Wirkverbindung. Die Rolle 88 wird vom Schweißdraht 13 in Bewegung versetzt und die Drehbewegung der Rolle 88 vom Drehgeber 87 aufgenommen. Somit kann auf einfache Art und Weise die Drahtfördergeschwindigkeit ermittelt werden.

Selbstverständlich ist es auch möglich, mehrere Erfassungseinrichtungen 85 anzuordnen, um beispielsweise Abweichungen der Drahtfördergeschwindigkeit besser ermitteln zu können. Somit könnte der Schlupf der Rollen, insbesondere der Antriebsrolle 32 und der Druckrolle 31 detektiert werden. Hierzu kann weiters ein Getriebe zwischen der Rolle 88 und dem Drehgeber 87 angeordnet werden, wodurch das Übersetzungsverhältnis reguliert werden kann. Der Drehgeber 87 ist nunmehr mit der Steuervorrichtung 4 des Schweißgerätes 1 bzw. der Schweißanlage und/oder einer Drahtfördersteuervorrichtung verbunden. Somit kann automatisch auf etwaige Abweichungen bei der Drahtfördergeschwindigkeit reagiert werden und die Drahtfördervorrichtung 27 dementsprechend angesteuert werden.

Weiters ist an der Erfassungseinrichtung 85 bzw. an einem Teil davon, ein Gleitelement 89 angeordnet, welches einen Durchgang 90 für den Schweißdraht 13 bildet. Am Gleitelement 89 ist eine Ausnehmung 91 angeordnet, welche so ausgebildet ist, dass die Rolle 88 des Drehgebers 87 in die Ausnehmung 91 eingreifen kann und bei eingeschobenem Schweißdraht 13 diesen kontaktiert. Die Ausnehmung 91 verläuft also mindestens bis zum Durchgang 90 für den Schweißdraht 13. Um eine verbesserte Kontaktierung der Rolle 88 mit dem Schweißdraht 13 zu gewährleisten, ist es jedoch erforderlich, die Ausnehmung 91 bevorzugt bis zur Mitte des Durchganges 90 für den Schweißdraht 13 auszubilden.

Das Gehäuse 86 der Einrichtung 85 ist bevorzugt aus zumindest zwei Teilen gebildet, so dass der Drehgeber 87 bei geöffnetem Gehäuse 86 leicht in das Gehäuse 86 eingesetzt werden kann und danach die beiden Teile des Gehäuses geschlossen werden. Bevorzugt ist das Gehäuse 86 bzw. die beiden Teile des Gehäuses 86 so ausgebildet, dass der Drehgeber 87 mit der Rolle 88 aus dem Gehäuse 86 herausragt und vor etwaiger Verschmutzung geschützt ist. Der Drehgeber 87 ist bevorzugt starr mit mindestens einem Teil des Gehäuses 86 verbunden und gegenüber dem weiteren Teil des Gehäuses 86 beweglich, insbesondere federnd, gelagert. Die beiden Teile des Gehäuses 86 weisen weiters einen Vorsprung 92 auf, an welchem eine Feder 93 angeordnet werden kann. Somit können die beiden Teile des Gehäuses 86 mittels der Feder 93 geschlossen und weiters geschlossen gehalten werden.

Die Rolle 88 kann beispielsweise eine Nut für den Schweißdraht 13 aufweisen, wodurch der Schweißdraht 13 während der Erfassung der Fördergeschwindigkeit von der Rolle 88 geführt ist. Aufgrund der Ausnehmung 91 ist nämlich der Schweißdraht 13 in jenem Bereich, in welchem dieser die Rolle 88 kontaktiert, ungeführt und kann nur beispielsweise durch beiderseits angeordnete Gleitelemente 89 oder die Nut in der Rolle 88 geführt werden. Die Rolle 88 muss nicht zwingend eine Nut für den Schweißdraht 13 aufweisen und kann an der Oberfläche auch glatt ausgeführt werden. Um einen geringstmöglichen Schlupf der Rolle 88 gegenüber dem Schweißdraht 13 zu erreichen, kann die Rolle 88 aus einem Material gebildet sein, welche geringe Schlupfeigenschaften gegenüber dem Material des Schweißdrahtes 13 aufweist.

Weiters kann in den beiden Teilen des Gehäuses 86 beispielsweise ein elektrisches Kontaktelement angeordnet werden, durch das lediglich bei geschlossenem Gehäuse 86 erkannt wird, ob ein Schweißdraht 13 durch das Gehäuse 86 verläuft oder nicht und somit entweder aktiviert oder deaktiviert ist. Dadurch kann die Einrichtung 85 zur Erfassung der Fördergeschwindigkeit des Schweißdrahts 13 bei nichtvorhandenem Schweißdraht 13 ausgeschaltet und bei eingeführtem Schweißdraht 13 aktiviert werden.

## Patentansprüche

1. Fördereinrichtung (27) eines Schweißdrahts (13), mit zumindest einem aus einer Antriebsrolle (32) und einer Druckrolle (31) bestehenden Rollenpaar (55), wobei die Antriebsrolle (32) mit einem Antriebsmotor kuppelbar ist, und mit einer Vorrichtung (28) zum Spannen des Schweißdrahts (13), wobei die Druckrolle (31) in einem schwenkbaren Druckhebel (29) gelagert ist, und die Spannvorrichtung (28) einen Spannbügel (37) aufweist, der zum Fixieren und zur Druckbeaufschlagung mit dem Druckhebel (29) verbindbar ist, wobei die Spannvorrichtung (28) eine Vorrichtung (41) zur Einstellung des Anpressdrucks der Druckrolle (31) auf den Schweißdraht (13) aufweist, welche durch einen Zuganker (58), ein Federelement (59) und eine Stellscheibe (60) gebildet ist, und der Spannbügel (37) und der Druckhebel (29) eine Fixiervorrichtung (57) aufweisen, **dadurch gekennzeichnet, dass** die Fixiervorrichtung (57) durch zumindest eine Bohrung (38) am Spannbügel (37) oder am Druckhebel (29) und einen korrespondierenden, in die Bohrung (38) einrastbaren Fixierstift (39) am Druckhebel (29) bzw. Spannbügel (37) gebildet ist.

2. Fördereinrichtung (27) nach Anspruch 1, **dadurch gekennzeichnet, dass** die Fixiervorrichtung (57) durch zwei Bohrungen (38) am Spannbügel (37) oder am Druckhebel (29) und einen korrespondierenden, in die Bohrung (38) einrastbaren Fixierstift (39) am Druckhebel (29) bzw. Spannbügel (37) gebildet ist.

3. Fördereinrichtung (27) nach Anspruch 1 oder 2, **dadurch gekennzeichnet, dass** am Druckhebel (29) ein Anschlagelement (40) zur Anlage des Spannbügels (37) bei Fixierung am Druckhebel (29) angeordnet ist.

4. Fördereinrichtung (27) nach Anspruch 3, **dadurch gekennzeichnet, dass** das Anschlagelement (40) an der gegenüberliegenden Seite des Fixierstifts (39) angeordnet ist.

5. Fördereinrichtung (27) nach einem der Ansprüche 1 bis 4, **dadurch gekennzeichnet, dass** die Spannvorrichtung (28) einen Durchbruch (34) zur Durchführung des Schweißdrahtes (13) aufweist.

6. Fördereinrichtung (27) nach einem der Ansprüche 1 bis 5, **dadurch gekennzeichnet, dass** die Stellscheibe (60) als Indikator zum Ablesen des Anpressdrucks auf einer Skala ausgebildet ist.

7. Fördereinrichtung (27) nach einem der Ansprüche 1 bis 6, **dadurch gekennzeichnet, dass** der Spannbügel (37) mit dem Zuganker (58) schwenkbar bzw. drehbar verbunden ist.

8. Fördereinrichtung (27) nach einem der Ansprüche 1 bis 7, **dadurch gekennzeichnet, dass** die Druckrolle (31) drehbar über einen Bolzen (36) im Druckhebel (29) gelagert ist.

9. Fördereinrichtung (27) nach Anspruch 8, **dadurch gekennzeichnet, dass** der Bolzen (36) zum Tausch der Druckrolle (31) lösbar im Druckhebel (29) angeordnet ist.

10. Fördereinrichtung (27) nach Anspruch 9, **dadurch gekennzeichnet, dass** der Spannbügel (37) in fixierter Stellung zumindest teilweise über dem Bolzen (36) zur Verhinderung einer Längsbewegung des Bolzens (36) angeordnet ist.

11. Fördereinrichtung (27) nach einem der Ansprüche 8 bis 10, **dadurch gekennzeichnet, dass** der Bolzen (36) im mittleren Längsbereich des Druckhebels (29) angeordnet ist.

12. Fördereinrichtung (27) nach einem der Ansprüche 1 bis 11, **dadurch gekennzeichnet, dass** die Vorspannung des Federelements (59) durch die Drehbewegung des Spannbügels (37) veränderbar ist, und damit der Druck bzw. die Anpresskraft der Druckrolle (31) auf den Schweißdraht (13) einstellbar ist.

13. Fördereinrichtung (27) nach einem der Ansprüche 1 bis 12, **dadurch gekennzeichnet, dass** ein Zwischenstück (49) zum Befestigen der Antriebsrolle (32) oder Druckrolle (31) an einer Welle (45) vorgesehen ist, wobei die Antriebsrolle (32) oder Druckrolle (31) eine nutförmige Einbuchtung (43) und eine Lagerbohrung (44) für die Anordnung der Welle (45) im Zentrum der Antriebsrolle (32) oder Druckrolle (31) aufweist, mit einem auf die Welle (45) aufsteckbaren Grundkörper (51), welcher Grundkörper (51) hülsenförmig ausgebildet ist, wobei in Längsrichtung des Grundkörpers (51) bevorzugt über die gesamte Länge des Grundkörpers (51) ein Schlitz (52) angeordnet ist.

14. Fördereinrichtung (27) nach Anspruch 13, **dadurch gekennzeichnet, dass** am Grundkörper (51) ein Befestigungsmittel, insbesondere eine Schraubverbindung, zur Klemmung bzw. Befestigung an der Welle (45) angeordnet ist.

15. Fördereinrichtung (27) nach Anspruch 13 oder 14, **dadurch gekennzeichnet, dass** am Grundkörper (51) ein Außengewinde (54) zur Befestigung der Antriebsrolle (32) oder Druckrolle (31) angeordnet ist.

16. Fördereinrichtung (27) nach einem der Ansprüche 13 bis 15, **dadurch gekennzeichnet, dass** am Grundkörper (51), insbesondere an der Innenfläche zumindest eine Zentrierfläche (50) und/oder Planfläche für die Positionierung der Antriebsrolle (32) oder Druckrolle (31) angeordnet ist.

17. Fördereinrichtung (27) nach einem der Ansprüche 13 bis 16, **dadurch gekennzeichnet, dass** Elemente zur Befestigung mit der Welle (45) vorgesehen sind.

18. Fördereinrichtung (27) nach Anspruch 17, **dadurch gekennzeichnet, dass** eine zur Zentrierfläche (47) des Ansatzelements (42) korrespondierende Zentrierfläche (50) und/oder Anschlagfläche zur Positionierung vorgesehen ist.

19. Fördereinrichtung (27) nach einem der Ansprüche 1 bis 18, **dadurch gekennzeichnet, dass** die Antriebsrolle (32) und die Druckrolle (31), eine Nut (84) zur Aufnahme des Schweißdrahts (13) aufweist und im Zentrum der Antriebsrolle (32) und der Druckrolle (31) eine Lagerbohrung (44) angeordnet ist, über die die Antriebsrolle (32) und die Druckrolle (31) jeweils auf einer Welle (45) bzw. Achse anordenbar ist, wobei an zumindest einer Rolle (31, 32) zumindestens ein Zentrierelement (81) angeordnet ist, wodurch eine gegenseitige axiale Ausrichtung der Rollen (31, 32) zueinander bzw. der Rollen (31, 32) zum Schweißdraht (13) erfolgt.

20. Fördereinrichtung (27) nach Anspruch 19, **dadurch gekennzeichnet, dass** am Umfang einer Rolle, insbesondere der Druckrolle (31), ein als trichterförmige Einbuchtung (82) ausgebildetes Zentrierelement (81) vorgesehen ist.

21. Fördereinrichtung (27) nach Anspruch 19 und 20, **dadurch gekennzeichnet, dass** am Umfang einer Rolle, insbesondere die Antriebsrolle (32), ein als V-förmiger Vorsprung (83) ausgebildetes Zentrierelement (81) vorgesehen ist, wobei die andere Rolle des Rollenpaars, insbesondere die Druckrolle (31), eine zum V-förmigen Vorsprung (83) korrespondierende V-förmige Einbuchtung (82) aufweist.

## Claims

1. A transport device (27) for a welding wire (13), including at least one roller pair (55) comprised of a drive roller (32) and a pressure roller (31), wherein the drive roller (32) is coupleable with a drive motor, and a device (28) for tensioning the welding wire (13), wherein the pressure roller (31) is mounted in a pivotable pressure lever (29) and the tensioning means (28) comprises a tension bracket (37) capable of being connected with the pressure lever (29) for fixation and pressure application, wherein the tensioning means (28) comprises a means (41) for adjusting the application pressure exerted by the pressure roller (31) on the welding wire (13), said means (41) being comprised of a tie rod (58), a spring element (59) and an adjustment disc (60), and the tension bracket (37) and the pressure lever (29) comprise a fixing means (57), **characterized in that** the fixing means (57) is formed by at least one bore (38) provided on the tension bracket (37) or on the pressure lever (29), and a corresponding fixing pin (39) provided on the pressure lever (29) or on the tension bracket (37), respectively, and engageable in the bore (38).

2. A transport device (27) according to claim 1, **characterized in that** said fixing means (57) is formed by two bores (38) provided on the tension bracket (37) or on the pressure lever (29), and a corresponding fixing pin (39) provided on the pressure lever (29) or on the tension bracket (37), respectively, and engageable in the bore (38).

3. A transport device (27) according to claims 1 or 2, **characterized in that** a stop element (40) is arranged on the pressure lever (29) for abutment of the tension bracket (37) upon fixation to the pressure lever (29).

4. A transport device (27) according to claim 3, **characterized in that** the stop element (40) is arranged on the opposite side of the fixing pin (39).

5. A transport device (27) according to any one of claims 1 to 4, **characterized in that** the tensioning means (28) comprises a passageway (34) for the passage of the welding wire (13).

6. A transport device (27) according to any one of claims 1 to 5, **characterized in that** the adjustment disc (60) is designed as an indicator for reading off the application pressure on a scale.

7. A transport device (27) according to any one of claims 1 to 6, **characterized in that** the tension bracket (37) is pivotally or rotationally connected with the tie rod (58).

8. A transport device (27) according to any one of claims 1 to 7, **characterized in that** the pressure roller (31) is mounted to rotate via a pin (36) provided in the pressure lever (29).

9. A transport device (27) according to claim 8, **characterized in that** the pin (36) is arranged in the pressure lever (29) so as to be removable for an exchange of the pressure roller (31).

10. A transport device (27) according to claim 9, **characterized in that** the tension bracket (37) is arranged in a fixed position at least partially above the pin (36) to prevent a longitudinal movement of the pin (36).

11. A transport device (27) according to any one of claims 8 to 10, **characterized in that** the pin (36) is arranged in the central longitudinal region of the pressure lever (29).

12. A transport device (27) according to any one of claims 1 to 11, **characterized in that** the bias of the spring element (59) is changeable by a rotational movement of the tension bracket (37) and, hence, the pressure or application force exerted by the pressure roller (31) on the welding wire (13) is adjustable.

13. A transport device (27) according to any one of claims 1 to 12, **characterized in that** an intermediate piece (49) is provided for fastening the drive roller (32) or pressure roller (31) to a shaft, wherein the drive roller (32) or pressure roller (31) includes a groove-shaped indentation (43) and a bearing bore (44) for the arrangement of the shaft (45) in the center of the drive roller (32) or pressure roller (31), including a base body (51) capable of being slipped onto the shaft (45), said base body (51) being designed in a sleeve-shaped manner with a slot (52) being provided in the longitudinal direction of the base body (51), preferably over the entire length of the base body (51).

14. A transport device (27) according to claim 13, **characterized in that** a fastening means, in particular a screw connection, is arranged on the base body (51) for clamping or fastening to the shaft (45).

15. A transport device (27) according to claim 13 or 14, **characterized in that** an external thread (54) is arranged on the base body (51) for fastening the drive roller (32) or pressure roller (31).

16. A transport device (27) according to any one of claims 13 to 15, **characterized in that** at least one centering surface (50) and/or planar surface is arranged on the base body (51), in particular on its inner surface, for positioning the drive roller (32) or the pressure roller (31).

17. A transport device (27) according to any one of claims 13 to 16, **characterized in that** elements are provided for fastening to the shaft (45).

18. A transport device (27) according to claim 17, **characterized in that** a centering surface (50) and/or stop surface corresponding with the centering surface (47) of the socket element (42) is provided for positioning.

19. A transport device (27) according to any one of claims 1 to 18, **characterized in that** the drive roller (32) and the pressure roller (31) include a groove (84) for receiving the welding wire (13) and a bearing bore (44) is provided in the center of the drive roller (32) and the pressure roller (31), via which bearing bore the drive roller (32) and the pressure roller (31) are each arrangeable on a shaft (45) or axle, wherein at least one centering element (81) is arranged on at least one of the rollers (31, 32) to effect the mutual axial alignment of the rollers (31, 32) relative to each other, and of the rollers (31, 32) relative to the welding wire (13).

20. A transport device (27) according to claim 19, **characterized in that** a centering element (81) designed as a funnel-shaped indentation (82) is provided on the circumference of a roller, in particular the pressure roller (31).

21. A transport device (27) according to claims 19 and 20, **characterized in that** a centering element (81) designed as a V-shaped projection (83) is provided on the circumference of a roller, in particular the drive roller (32), wherein the other roller of the roller pair, in particular the pressure roller (31), has a V-shaped indentation (82) corresponding with the V-shaped projection (83).

## Revendications

1. Dispositif de transport (27) pour le transport d'un fil de soudure (13), avec au moins une paire de rouleaux (55) constituée d'un rouleau d'entraînement (32) et d'un rouleau de pression (31), le rouleau d'entraînement (32) pouvant être couplé avec un moteur d'entraînement, et avec un dispositif (28) pour le serrage du fil de serrage (13), le rouleau de pression (31) étant logé dans un levier de pression (29) pivotant et le dispositif de serrage (28) comprenant un étrier de serrage (37), qui peut être relié, pour la fixation et pour l'application d'une pression, avec le levier de pression (29), le dispositif de serrage (28) comprenant un dispositif (41) pour le réglage de la pression d'appui du rouleau de pression (31) sur le fil de soudure (13), qui est constitué d'un tirant (58), d'un élément à ressort (59) et d'une rondelle de réglage (60), et l'étrier de serrage (37) et le levier de pression (29) comprenant un dispositif de fixation (57), **caractérisé en ce que** le dispositif de fixation (57) est constitué d'au moins un alésage (38) sur l'étrier de serrage (37) ou sur le levier de pression (29) et d'une broche de fixation correspondante (39) pouvant être insérée dans l'alésage (38) sur le levier de pression (29) ou sur l'étrier de serrage (37).

2. Dispositif de transport (27) selon la revendication 1, **caractérisé en ce que** le dispositif de fixation (57) est constitué de deux alésages (38) sur l'étrier de serrage (37) ou sur le levier de pression (29) et d'une broche de fixation correspondante (39) pouvant être insérée dans l'alésage (38) sur le levier de pression (29) ou sur l'étrier de serrage (37).

3. Dispositif de transport (27) selon la revendication 1 ou 2, **caractérisé en ce que**, sur le levier de pression (29), se trouve un élément de butée (40) pour l'appui de l'étrier de serrage (37) lors de la fixation sur le levier de pression (29).

4. Dispositif de transport (27) selon la revendication 3, **caractérisé en ce que** l'élément de butée (40) se trouve sur le côté opposé de la broche de fixation (39).

5. Dispositif de transport (27) selon l'une des revendications 1 à 4, **caractérisé en ce que** le dispositif de serrage (28) comprend une percée (34) pour le passage du fil de soudure (13).

6. Dispositif de transport (27) selon l'une des revendications 1 à 5, **caractérisé en ce que** la rondelle de réglage (60) est conçue comme un indicateur pour la lecture de la pression d'appui sur une échelle.

7. Dispositif de transport (27) selon l'une des revendications 1 à 6, **caractérisé en ce que** l'étrier de serrage (37) est relié de manière pivotante ou rotative avec le tirant (58).

8. Dispositif de transport (27) selon l'une des revendications 1 à 7, **caractérisé en ce que** le rouleau de pression (31) est logé de manière rotative par l'intermédiaire d'un axe (36) dans le levier de pression (29).

9. Dispositif de transport (27) selon la revendication 8, **caractérisé en ce que** l'axe (36) est disposé de manière amovible dans le levier de pression (29) pour le remplacement du rouleau de pression (31).

10. Dispositif de transport (27) selon la revendication 9, **caractérisé en ce que** l'étrier de serrage (37) se trouve dans une position fixée au moins partiellement au-dessus de l'axe (36) afin d'empêcher un mouvement longitudinal de l'axe (36).

11. Dispositif de transport (27) selon l'une des revendications 8 à 10, **caractérisé en ce que** l'axe (36) est disposé dans une zone longitudinale centrale du levier de pression (29).

12. Dispositif de transport (27) selon l'une des revendications 1 à 11, **caractérisé en ce que** la précontrainte de l'élément à ressort (59) peut être modifiée par le mouvement rotatif de l'étrier de serrage (37) et la pression et donc la force d'appui du rouleau de pression (31) sur le fil de soudure (13) peut ainsi être réglée.

13. Dispositif de transport (27) selon l'une des revendications 1 à 12, **caractérisé en ce qu'**une pièce intermédiaire (49) est prévue pour la fixation du rouleau d'entraînement (32) ou du rouleau de pression (31) sur un arbre (45), le rouleau d'entraînement (32) ou le rouleau de pression (31) présentant une indentation (43) en forme de rainure et un alésage de palier (44) pour l'insertion de l'arbre (45) au centre du rouleau d'entraînement (32) ou du rouleau de pression (31), avec un corps de base (51) pouvant être emboîté sur l'arbre (45), ce corps de base (51) étant conçu sous la forme d'un manchon, une fente (52) étant prévue dans la direction longitudinale du corps de base (51), de préférence sur toute la longueur du corps de base (51).

14. Dispositif de transport (27) selon la revendication 13, **caractérisé en ce que**, sur le corps de base (51), se trouve un moyen de fixation, plus particulièrement un raccord vissé, pour le serrage ou la fixation à l'arbre (45).

15. Dispositif de transport (27) selon la revendication 13 ou 14, **caractérisé en ce que**, sur le corps de base (51), se trouve un filetage externe (54) pour la fixation du rouleau d'entraînement (32) ou du rouleau de pression (31).

16. Dispositif de transport (27) selon l'une des revendications 13 à 15, **caractérisé en ce que**, sur le corps de base (51), plus particulièrement sur la surface interne, se trouve au moins une surface de centrage (50) et/ou une surface plane pour le positionnement du rouleau d'entraînement (32) ou du rouleau de pression (31).

17. Dispositif de transport (27) selon l'une des revendications 13 à 16, **caractérisé en ce que** des éléments sont prévus pour la fixation avec l'arbre (45).

18. Dispositif de transport (27) selon la revendication 17, **caractérisé en ce qu'**une surface de centrage (50) et/ou une surface de butée correspondant à une surface de centrage (47) de l'élément d'extension (42) est prévue.

19. Dispositif de transport (27) selon l'une des revendications 1 à 18, **caractérisé en ce que** le rouleau d'entraînement (32) et le rouleau de pression (31) comprend une rainure (84) pour le logement du fil de soudure (13) et, au centre du rouleau d'entraînement (32) et du rouleau de pression (31), se trouve un alésage de palier (44) grâce auquel le rouleau d'entraînement (32) et le rouleau de pression (31) peuvent être disposés chacun sur un arbre (45) ou un axe, au moins un élément de centrage (81) étant disposé sur au moins un rouleau (31, 32), ce qui permet un alignement axial mutuel des rouleaux (31, 32) entre eux ou des rouleaux (31, 32) avec le fil de soudure (13).

20. Dispositif de transport (27) selon la revendication 19, **caractérisé en ce que**, sur la périphérie d'un rouleau, plus particulièrement du rouleau de pression (31), est prévu un élément de centrage (81) conçu comme une indentation (82) en forme d'entonnoir.

21. Dispositif de transport (27) selon la revendication 19 et 20, **caractérisé en ce que**, sur la périphérie d'un rouleau, plus particulièrement du rouleau d'entraînement (32) est prévu un élément de centrage (81) conçu comme une saillie en forme de V (83), l'autre rouleau de la paire de rouleaux, plus particulièrement le rouleau de pression (31), comprend une indentation en forme de V (82) correspondant à la saillie en forme de V (83).
